# EUROPEAN PATENT APPLICATION

(11) **EP 2 511 199 A1**
(43) Date of publication of application: **17.10.2012**
(21) Application number: 10835518.1
(22) Date of filing: 10.12.2010
(51) Int. Cl.: B65G 1/04, B65G 63/02

(54) **SYSTEM FOR CONVEYING HEAVY LOADS AND OPERATING METHOD THEREOF**

(30) Priority: 11.12.2009 ES 200902313
(71) Applicant: Grupo De Ingenieria Oceanica, S.L., Tenerife, Islas Canarias (ES)
(72) Inventor: DEL CAMPO Y RUIZ DE ALMODOVAR, Cesar, E-11500 El Puerto de Santa Maria (Cádiz) (ES)
(74) Representative: Garcia-Cabrerizo y del Santo, Pedro Maria
(86) International application number: PCT/ES2010/000506
(87) International publication number: WO 2011/070195

(57) **Abstract**

System for transferring large loads and method for operating thereof completely versatile and suitable for any load, regardless its weight and size.

The system comprises several rolling paths and several trolleys supporting loads. The trolleys have a roll or skid system through which these move forward along rolling paths, a mean for lifting the load to a small distance from the floor using hydraulic cylinders, and a system for avoiding the overturning, of the pinion-rack type, which also serves for guiding and dragging the trolley.

## Description

### Technical field

The present invention falls within the technical field concerning the systems for transferring large loads in various applications, including on-dock manufacturing of structures or platforms for installing devices at the sea.

In this type of manufacture, the structure or platform to be manufactured has to pass from one manufacturing station to another, not serving any of the known methods.

That is why the objective of this invention consists of designing a system that adapts to any type of load, regardless of its size or weight, and which allows it to move easily.

### Background of the invention

In the state of the art, there are several systems trying to solve the problem of transferring large loads. The first and perhaps the oldest of all, consists of manufacturing the piece to be moved on a surface made of a material with low friction coefficient, such as Teflon, greased with a suitable grease and dragged over the entire surface. The system is expensive, occupies a large space and requires a large tensile stress.

Another solution is increasing the load onto an air mattress used for medium weighted loads, because for heavier loads the required air volume and compressor capacity would make it economically unviable.

The traditional system of tracks and rolling is advisable when the piece design allows it since, if this system were used with large-load platforms or appliances, said load would be transferred to rails, and the load is concentrated such that the ground could hardly withstanding it, whereby it would not be viable.

Another commercial system consists of manufacturing the piece on a series of rolling skids which in turn moves along tracks, and once manufactured and the load mounted, the tracks move. This system is useful for any metallic construction, in which pieces are added, but in the case of a concrete platform is not viable since the first thing to do is concreted, and when performing this operation the skid system would be damaged, and also the concrete would come close to the floor and it would be impossible to move.

Therefore something that fits all cases and, in particular, solves the issue of manufacturing a concrete platform for installing devices at the sea, has to be designed.

### Description of the invention

The system for transferring large loads object of the present invention solves all the aforementioned problems, in addition of being completely versatile and suitable for any load, regardless of its weight or size.

The system for transferring large loads rests on the floor of the area wherein it will be manufactured. Said floor has to be leveled and in good condition.

On the floor a steel wheel is placed, to which thicker and thinner wheels are attached at the center. These wheels, making up the rolling travel, are joined together by screws under the thicker wheel so as obstacles are not created in the rolling. The lowest thinner wheel is tightly joined to the floor.

In the space of the thin wheel not occupied by the thick wheel, a rack is placed on each side thereof.

On the thick wheel a skid is placed. The skid will be a commercial skid.

The thin wheel underside is wider than the skid rolling elements. On both sides of the skid two separate blocks made of high strength solid steel are placed, wherein a series of drill-holes are made in its upper face in order to build hydraulic cylinders

In each of these steel blocks a drill-hole or continuous tube perpendicular to the cylinders is made, this will be the one that, through a small orifice made in said cylinders, distributes the hydraulic fluid to the cylinders.

Although the entire structure is very stable, in order to avoid any risk because it gets out or overturns, the shaft of one or several pinions moved through a motor is placed at the bottom of the steel block. The number needed to overcome the rolling resistance and to be able of moving the load, will be placed. Other equally free-rotating pinions are placed on each side, to enhance and ensure guiding the displacement and preventing it from derailing. These pinions run through the racks located on the thin wheel. This rack-pinion transmission driven by motors will serve for both guiding and dragging the trolley. Thus, not leaving the trolley and moving wherever desired is ensured.

Addressing the problems mentioned in the previous section, it is observed that the solution developed and which protection is requested, solves them by providing a series of advantages over that existing in the state of the art, among which should be mentioned the versatility of the device, which allows quickly transferring loads of all sizes and all dimensions, by simply increasing the number of skids and tracks with low cost and little effort.

### Description of the figures

In order to complete the description being made and for helping to a better understanding of the features of the invention a set of drawings is accompanied, wherein in an illustrative and not limitative manner, the following has been represented:

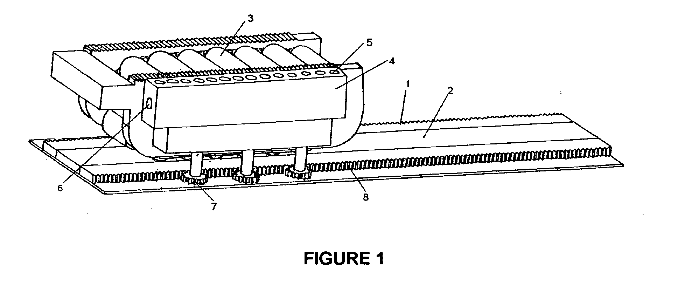

Figure 1: System for transferring large loads

A list of references used in the figures is provided bellow:
(1) Thin wheel
(2) Thick wheel
(3) Skid
(4) Steel blocks
(5) Drill-holes for hydraulic cylinders
(6) Drill-hole or main tube
(7) Pinion
(8) Rack

### Detailed description of the invention

In order to achieve a better understanding of the invention, the system for transferring large loads of the claimed invention is going to be described based on the presented figures.

As shown in Figure 1, the system comprises a thin steel wheel (1) on which a thicker and smaller width wheel (2) is placed. That thick wheel (2) is screwed to the thin wheel (1) and the thin wheel (1) is screwed to the floor, being the floor well leveled.

These wheels (1, 2) make up a track which length is the same as the entire route to be performed by the load. Many as needed will be placed.

On the thick wheel (2) a skid (3) rolling along the entire track is placed.

To this set two steel blocks (4) are coupled on both sides of the skid (3). In each block a series of drill-holes (5) are made, these will serve for placing hydraulic cylinders. Into each drill-hole (5) a hydraulic piston is inserted.

The cylinders have to be fed with hydraulic fluid. For this purpose, a drill-hole or main tube (6) is made along the entire steel block (4), perpendicular to the hydraulic cylinders and below their base. Each of these cylinders has a drill-hole at its base connecting it with the main tube (6). This tube is sealed, airtight, watertight and pressure resistant. In the main tube (6) the fluid for feeding the pistons and lifting the load is injected. All sets consisting of a skid and hydraulic pistons, aligned on the same track are joined together either by a rigid pipe or flexible hose forming each alignment a single hydraulic circuit. All parallel alignments are joined through a distributor to the hydraulic pump and to the system for controlling the lifting and transfer. If the motors are hydraulic, these are fed and controlled in the same way, i.e. all of the same alignment connect to each other, and through a distributor to the pump and control system.

Although the entire structure is very stable, in order to avoid any risk because it gets out or overturns, the shaft of one or several pinions (7) moved through a motor is placed at the bottom of the steel block (4). In each trolley the number of motors needed will be installed. Other equally free-rotating pinions are placed on each side, to enhance and ensure guiding displacement and preventing it from derailing. These pinions run through the racks (8) located on the thin wheel. This rack-pinion transmission driven by motors will serve for both guiding and dragging the trolley. Thus, not leaving the trolley and moving wherever desired is ensured.

Depending on the size and weight of the piece a different number of rolling paths, of different lengths and with different number of trolleys will be required. All trolleys running on the same rolling path are connected together by a hose tube so that all tubes distributing the fluid to the pistons are in communication, and the fluid is at the same height, through communicating vessels. Thus the load to be properly lifted is ensured.

In practice, the way to proceed would be as follows:
● Depending on the type of load to be transferred, the number of rolling paths to be needed and the number of trolleys needed in every path are calculated.
● The wheels (1, 2) forming the rolling paths are fixed.
● Then U-shaped profiles are placed on the rolling paths. On these a sheet of polyethylene or any lightweight and flexible plastic is placed in order to avoid the entry of concrete o dirt to the paths during manufacture, and that the U-shaped profiles attaches to the concrete, thereby preventing its reutilization.
• If building were needed, the construction on the U-shaped profiles of the structure to be transferred is performed or, in case of a concrete platform, the platform to be transferred is concreted. If not, the load is simply placed on the U.
• When these operations are completed or when the concrete of the platform is hardened, trolleys are introduced into the hole left by the U. In this way, the trolleys are not damaged by the building or concreting operations.
• Once the trolleys are under the piece to be transferred, the pistons are lifted so that the entire platform is raised. Then, the concrete slab or the structure to be transferred is lifted a couple of centimeters above the ground. The only thing supported in this situation would be the skid wheels on the rolling path.
• With a remote control the motors moving the pinions are connected, and the trolleys with the load are moved through the rolling paths towards where desired.
• When the destination is reached, the motor stops, the pressure is taken off the pneumatic cylinders and the load is lowered. The trolleys can then be removed for use elsewhere.

This system is originally designed for use as a transfer system for mass production manufacturing of floating platforms used for installing devices at the sea, but there are a number of alternative applications, since it is not decisive for manufacturing the claimed transfer system or the type of load intended to be manufactured, nor the size or weight thereof, or the type of methods involving its manufacturing.

It is therefore a completely versatile manufacturing system, and which can be adapted to any industry field wherein transferring large loads is required.

## Claims

1. System for transferring large loads of those using several rolling paths and several trolleys supporting loads and running on these rolling paths, **characterized in that** each trolley comprises a roll or skid system through which it moves forward along the rolling paths comprising a thin wheel to which a thicker and thinner wheel is joined, a mean for lifting the load to a small distance from the floor using hydraulic cylinders, and a system for avoiding the overturning which also serves for guiding and dragging the trolley.

2. System for transferring large loads according to claim 1 **characterized in that** the rolling paths length is the same as the entire route to be performed by the load.

3. System for transferring large loads according to claim 2 **characterized in that** the wheels forming the rolling paths are made of steel.

4. System for transferring large loads according to claim 1 **characterized in that** the rolling system is a commercial skid.

5. System for transferring large loads according to claim 1 **characterized in that** the hydraulic cylinders are located in two blocks placed on both sides of the skid to which a series of drill-holes is made on its upper face, and the pistons are inserted therein.

6. System for transferring large loads according to claim 5 **characterized in that** the hydraulic fluid of the cylinders is stored in a drill-hole or continuous tube made in the block and perpendicular to the cylinders, which will be the one that, through a small orifice made in said cylinders, injects the hydraulic fluid therein.

7. System for transferring large loads according to claim 6 **characterized in that** all the trolleys running on the same rolling path are connected together by a tube, so that all the tubes distributing the fluid to the pistons are in communication, and the fluid is at the same height, through communicating vessels.

8. System for transferring large loads according to claim 1 **characterized in that** the system for avoiding the derailment comprises a transmission and side guides by rack-pinion.

9. System for transferring large loads according to claim 5 **characterized in that** the underside of each block is fixed to at least one pinion driven by a motor running through a rack located on the thin wheel side, so that it in turn server for guiding and dragging.

10. Method for operating the system for transferring large loads described in preceding claims comprising the following operations:
• depending on the type of load to be transferred, the number of rolling paths to be needed and the number of trolleys needed in every path are calculated,
• the wheels forming the rolling paths are fixed,
• then U-shaped profiles are placed on the rolling paths,
• on these a sheet of polyethylene or any lightweight and flexible plastic is placed,
• if building were needed, the construction on the U-shaped profiles of the structure to be transferred is proceeded or, in case of a concrete platform, the platform to be transferred is concreted, if not, the load is simply placed on the U,
• when these operations are completed or when the concrete of the platform is hardened, trolleys are introduced into the hole left by the U,
• once the trolleys are under the piece to be transferred, the pistons are lifted so that the entire platform is raised,
• with a remote control the motors moving the pinions are connected, and the trolleys with the load are moved through the rolling paths towards where desired,
• when the destination is reached, the motor stops, the pressure is taken off the pneumatic cylinders and the load is lowered, the trolleys can then be removed for use elsewhere.
